(19) Europäisches Patentamt
European Patent Office
Office européen des brevets

(11) Veröffentlichungsnummer: **0 271 776 B1**

(12) # EUROPÄISCHE PATENTSCHRIFT

(45) Veröffentlichungstag der Patentschrift: **03.06.92**

(51) Int. Cl.5: **C08G 12/12**, C08G 12/40, C09D 161/24

(21) Anmeldenummer: **87117864.6**

(22) Anmeldetag: **03.12.87**

Die Akte enthält technische Angaben, die nach dem Eingang der Anmeldung eingereicht wurden und die nicht in dieser Patentschrift enthalten sind.

(54) **Harnstoff-Aldehyd-Polykondensate, ein Verfahren zu deren Herstellung sowie deren Verwendung als Lackbindemittel.**

(30) Priorität: **09.12.86 DE 3641997**

(43) Veröffentlichungstag der Anmeldung:
**22.06.88 Patentblatt 88/25**

(45) Bekanntmachung des Hinweises auf die Patenterteilung:
**03.06.92 Patentblatt 92/23**

(84) Benannte Vertragsstaaten:
**AT BE CH DE ES FR GB IT LI LU NL SE**

(56) Entgegenhaltungen:
**EP-A- 0 002 794**
**EP-A- 0 033 115**
**DE-A- 1 810 925**
**DE-A- 2 639 754**
**DE-A- 3 425 131**

(73) Patentinhaber: **BASF Aktiengesellschaft**
**Carl-Bosch-Strasse 38**
**W-6700 Ludwigshafen(DE)**

(72) Erfinder: **Fischer, Kurt**
**Mundenheimer Strasse 168**
**W-6700 Ludwigshafen(DE)**
Erfinder: **Petersen, Harro, Dr.**
**Kalmitstrasse 23**
**W-6710 Frankenthal(DE)**
Erfinder: **Kasch, Hellmuth**
**Rheinecke 2**
**W-6700 Ludwigshafen(DE)**
Erfinder: **Schmidt, Horst, Dr.**
**Kopernikusstrasse 56**
**W-6800 Mannheim 1(DE)**

**EP 0 271 776 B1**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die vorliegende Erfindung betrifft Harnstoff-Aldehyd-Polykondensate, erhältlich durch Umsetzung von

a) 1 mol eines Harnstoffes der allgemeinen Formel (I)

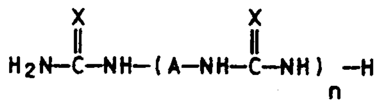

(I),

in der X Sauerstoff oder Schwefel und A einen $C_1$-$C_6$-Alkylenrest bedeuten und n für 0 bis 3 steht, mit 1,9 (n + 1) bis 2,2 (n + 1) mol eines Aldehyds der allgemeinen Formel (II)

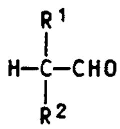

(II),

in der $R^1$ und $R^2$ für Kohlenwasserstoffreste mit bis zu 20 C-Atomen stehen, bei Temperaturen von 60 bis 120 ° C in Gegenwart einer Säure zu einem 2-Oxohexahydropyrimidinderivat und

b) anschließende Umsetzung des so hergestellten 2-Oxohexahydropyrimidinderivats mit einem Gemisch aus 2,8 bis 3,2 mol Formaldehyd und 2,8 bis 3,2 mol Aldehyd (II), jeweils pro mol Harnstoff (I), bei Temperaturen von 60 bis 120 ° C,

c) Entfernung des Wassers, sowie

d) weiterer Umsetzung des so erhaltenen Harzes mit einem Alkalimetallalkoholat bei 80 bis 100 ° C.

Säurekatalysierte Kondensationsprodukte aus Harnstoff und Aldehyden sind bekannt. So werden in den europäischen Patentschriften 0002793 und 0002794 Verfahren zur Herstellung von Weich- und Hartharzen aus Harnstoff und CH-aciden Aldehyden unter Säurekatalyse und unter Nachbehandlung der Kondensationsprodukte mit Basen in wasserfreiem Medium beschrieben.

In der DE-OS 34 25 131 wird ein zweistufiges Verfahren zur Herstellung von Harnstoff-Aldehyd-Polykondensaten beschrieben wobei in der ersten Stufe unter Säurekatalyse Harnstoff mit einem $\alpha,\alpha$-Dialkylaldehyd im Molverhältnis (Harnstoff : Aldehyd) von 1 : 2 zu einem 2-Oxo-hexahydropyrimidinderivat umgesetzt wird, das in der zweiten Stufe mit einem Formaldehyd und mindestens einem Alkohol kondensiert wird.

Diese Kondensationsprodukte werden allein oder in Kombination mit physikalisch trocknenden Bindemitteln wie Cellulosederivaten, Chlorkautschuk, Mischpolymerisaten auf Vinylester-, Vinylether-, Vinylchlorid-, Vinylaromaten-, Acrylester-Basis oder chemisch trocknenden Bindemitteln, wie Alkydharzen, trocknenden und halbtrocknenden Ölen zur Herstellung von Lacken verwendet. Die oben beschriebenen Kondensationsprodukte sind in Lösungsmitteln, wie Alkoholen, Ketonen, Estern und aromatischen Kohlenwasserstoffen, wie z.B. Toluol und Xylol gut löslich. Sie sind jedoch nur begrenzt (maximal 1 : 1) mit aromatenhaltigen Testbenzinen verdünnbar und praktisch unlöslich in aliphatischen Kohlenwasserstoffen.

Bei der Entwicklung umweltfreundlicher Lacksysteme wird aber die Verwendung von aromatenfreien Lösungsmitteln angestrebt.

Aufgabe der vorliegenden Erfindung war es, Harnstoff-Aldehyd-Kondensationsprodukte bereitzustellen, die unbegrenzt in aliphatischen Kohlenwasserstoffen löslich sind und damit zur Fertigung von umweltfreundlichen Lacken geeignet sind.

Demgemäß wurden die Harnstoff-Aldehyd-Polykondensate gefunden, erhältlich durch Umsetzung von

a) 1 mol eines Harnstoffes der allgemeinen Formel (I)

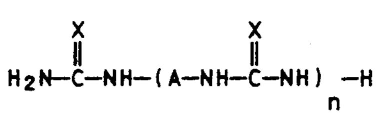

(I),

in der X Sauerstoff oder Schwefel und A einen $C_1$-$C_6$-Alkylenrest bedeuten und n für 0 bis 3 steht, mit

1,9 (n + 1) bis 2,2 (n + 1) mol eines Aldehyds der allgemeinen Formel (II)

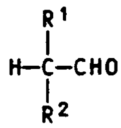 (II),

in der $R^1$ und $R^2$ für Kohlenwasserstoffreste mit bis zu 20 C-Atomen stehen, bei Temperaturen von 60 bis 120 ° C in Gegenwart einer Säure zu einem 2-Oxohexahydropyrimidinderivat und

b) anschließende Umsetzung des so hergestellten 2-Oxohexahydropyrimidinderivats mit einem Gemisch aus 2,8 bis 3,2 mol Formaldehyd und 2,8 bis 3,2 mol Aldehyd (II), jeweils pro mol Harnstoff (I), bei Temperaturen von 60 bis 120 ° C,

c) Entfernung des Wassers, sowie

d) weiterer Umsetzung des so erhaltenen Harzes mit einem Alkalimetallalkoholat bei 80 bis 100 ° C.

Gegenstand der vorliegenden Erfindung ist außerdem ein Verfahren zur Herstellung der Harnstoff-Aldehyd-Polykondensate sowie deren Verwendung als Lackbindemittel.

Geeignete Harnstoffe der allgemeinen Formel (I) mit n = O sind beispielsweise Harnstoff und Thioharnstoff mit n = 1 Methylendiharnstoff, Ethylendiharnstoff, Tetramethylendiharnstoff und Hexamethylendiharnstoff sowie deren Gemische, vorzugsweise Harnstoff.

Geeignete Aldehyde der allgemeinen Formel (II) sind beispielsweise Isobutyraldehyd, 2-Methylpentanal, 2-Ethylhexanal und 2-Phenylpropanal sowie deren Gemische, vorzugsweise Isobutyraldehyd.

Formaldehyd kann in wäßriger Form oder als Paraformaldehyd eingesetzt werden.

Als Säuren für die Kondensationsreaktion eignen sich übliche anorganische und organische Säuren wie Salzsäure, Schwefelsäure, Salpetersäure, Oxalsäure oder p-Toluolsulfonsäure, vorzugsweise Schwefelsäure.

Das erfindungsgemäße Verfahren wird bevorzugt in Gegenwart von Lösungs-und/oder Verdünnungsmitteln durchgeführt. Als Lösungsmittel eignen sich insbesondere aromatische Kohlenwasserstoffe wie Toluol oder Xylol.

Zur Durchführung des erfindungsgemäßen Verfahrens wird in einer ersten Stufe aus Harnstoff (I) und Aldehyd (II) im Molverhältnis von 1 : 1,9 bis 1 : 2,2, bevorzugt 1 : 2, in Gegenwart einer Säure bei Temperaturen von 60 bis 120 ° C, vorzugsweise 80 bis 85 ° C und Verweilzeiten von 1 bis 2 Stunden durch eine Cyclokondensationsreaktion ein 2-Oxo-hexahydropyrimidinderivat gebildet. Weicht das Molverhältnis Harnstoff : Aldehyd von 1 : 2 zu sehr ab, sind die in der zweiten Kondensationsstufe gebildeten Produkte unlöslich in aliphatischen Kohlenwasserstoffen.

Das 2-Oxo-hexahydropyrimidinderivat wird in einer zweiten Stufe mit 2,8 bis 3,2 mol, bevorzugt 3 mol Formaldehyd pro mol Harnstoff und 2,8 bis 3,2, bevorzugt 3 mol Aldehyd (II) versetzt und 1 bis 2 Stunden bei 60 bis 120 ° C, vorzugsweise 80 bis 90 ° C, kondensiert.

Das Molverhältnis Harnstoff : Formaldehyd : Aldehyd (II) beträgt nun 1 : 2,8 bis 3,2 : 4,7 bis 5,4, bevorzugt 1 : 3 : 5, was wesentlich für die Löslichkeit der erfindungsgemäßen Kondensationsprodukte in aliphatischen Kohlenwasserstoffen ist.

Nach beendeter saurer Kondensation wird die wäßrige Phase, gegebenenfalls nach Zusatz eines Lösungsmittels, vorzugsweise Xylol, abgetrennt und noch vorhandenes Restwasser durch azeotrope Destillation entfernt. Anschließend werden 2 bis 6 Gew.-%, bezogen auf das Kondensationsprodukt eines Alkalimetallalkoholats, vorzugsweise Natriummethylat, zugesetzt und 1 bis 2 Stunden bei 80 bis 100 ° C erwärmt. Danach wird mit einer anorganischen oder organischen Säure neutralisiert, z.B. mit Schwefelsäure, Phosphorsäure oder Oxalsäure, das Salz mit Wasser ausgewaschen und das in der organischen Lösungsmittelphase gelöste Kondensationsprodukt durch Destillation unter vermindertem Druck vom Lösungsmittel befreit.

Das erfindungsgemäße Verfahren kann kontinuierlich und diskontinuierlich durchgeführt werden.

Die erfindungsgemäßen Kondensationsprodukte sind sowohl in den in der Lacktechnik üblichen Lösungs- und Verdünnungsmitteln, wie Alkoholen, Ketonen, Estern, aromatischen Kohlenwasserstoffen als auch in aliphatischen Kohlenwasserstoffen unbegrenzt löslich.

Sie eignen sich in Kombination mit anderen üblicherweise als Lackbindemittel zu verwendenden Filmbildnern wie Cellulosederivaten, Chlorkautschuk, Mischpolymerisaten auf Vinylester-, Vinylether-, Vinylchlorid-, Acrylester-, Vinylaromaten-Basis, wie Vinylchlorid, Vinylisobutylethercopolymerisaten oder chemisch trocknenden Bindemitteln, wie Alkydharzen, trocknenden und halbtrocknenden Ölen zur Herstellung von Lacken, wobei der Gehalt an Kondensationsprodukten in weiten Grenzen variieren kann, in den

meisten Fällen jedoch nicht mehr als 50, vorzugsweise 2 bis 35 Gew.-% des gesamten Bindemittels beträgt.

Sie lassen sich auch als Bindemittel in entsprechend geeigneter Weichmacherkombination zur Herstellung von Überzugs- oder Schutzlacken einsetzen.

Die erfindungsgemäßen Lackbindemittel eignen sich unter Anwendung üblicher Applikationsverfahren, wie Streichen, Spritzen oder Gießen zum Lackieren von Substraten, wie Metall, Holz, Spanplatten und Papier. Sie lassen sich sehr vorteilhaft verarbeiten. Man erhält Lackierungen mit sehr guten mechanischen Eigenschaften, gutem Glanz, hervorragender Lichtbeständigkeit, guter Beständigkeit gegen Wärmevergilbung sowie guter Wasserfestigkeit.

Die erfindungsgemäßen Harnstoff-Aldehyd Polykondensate lassen sich als Bindmittel in Straßenmarkierungsbeschichtungsmitteln verwenden.

Beispiel 1

In einem Reaktionsgefäß wurden 360 g (5 mol) Isobutyraldehyd und 150 g (2,5 mol) Harnstoff auf 60 ° C erwärmt und innerhalb von 10 Minuten mit 250 g 50 gew.-%iger Schwefelsäure versetzt. Die Mischung wurde auf 80 ° C aufgeheizt und 1 Stunde bei dieser Temperatur gerührt. Danach wurde auf 50 ° C abgekühlt, 563 g (7,5 mol) 40 gew.-%igen Formaldehyd und 540 g (7,5 mol) Isobutyraldehyd hinzugefügt und weitere 3 Stunden bei 80 ° C gerührt. Nach Zugabe von 800 g Xylol wurde die wäßrige Phase abgetrennt. Die Xylolphase wurde durch azeotrope Destillation bei 50 ° C und 50 mbar vom Restwasser befreit, mit 90 g einer 30 gew.-%igen Natriummethylatlösung versetzt und 1 Stunde bei 90 bis 95 ° C gerührt. Anschließend wurde auf 70 ° C abgekühlt, mit 75 gew.-%iger Schwefelsäure neutralisiert und 2 mal mit je 500 g Wasser ausgewaschen. Die Xylolphase wurde im Dünnschichtverdampfer bei 180 bis 185 ° C und 5 mbar eingedampft. Man erhielt 832 g eines schwach gelb gefärbten Kondensationsproduktes mit einem Erweichungspunkt nach DIN 53180 von ca. 85 ° C.
Säurezahl (DIN 53401)<5
Farbzahl (DIN 6162)<2
Nichtflüchtige Bestandteile (2 Stunden 125 ° C)>98 %

Das Kondensationsprodukt ist in aromatenfreien Benzinkohlenwasserstoffen, wie Petroleumbenzin (Siedebereich 90 bis 100 ° C), Spezialbenzinen mit Siedebereichen von 60 bis 95 ° C und 155 bis 170 ° C, klar löslich und unbegrenzt verdünnbar.

Beispiel 2

Kontinuierliches Herstellungsverfahren

Dem ersten Kolben einer Laborkaskade, bestehend aus drei hintereinander geschalteten 1 l-Kolben, wurden 88 g/h einer 50 gew.-%igen wäßrigen Harnstofflösung, 106 g/h Isobutyraldehyd und 75 g/h einer 50 gew.-%igen Schwefelsäure kontinuierlich über Dosierpumpen zugeführt, wobei die Temperatur bei 80 bis 85 ° C gehalten wurde. Die Verweilzeit im ersten Kolben betrug ca. 1,4 Stunden. Im zweiten Kolben der Kaskade wurden unter Einhaltung einer Temperatur von 85 bis 90 ° C 165 g/h einer 40 gew.-%igen wäßrigen Formaldehydlösung und 159 g/h Isobutyraldehyd zudosiert. In der dritten Kaskadenstufe wurde die Kondensation bei 90 ° C zu Ende geführt. Die Gesamtverweilzeit in der Kaskade betrug ca. 4,3 Stunden.

Das im Verlauf von 5 Stunden aus der Kaskade anfallende Reaktionsprodukt wurde in 1 300 g Xylol gelöst und nach Abtrennen der wäßrigen Phase durch azeotrope Destillation, wie in Beispiel 1 beschrieben, vom Restwasser befreit. Danach fügte man 132 g einer 30 gew.-%igen Natriummethylatlösung hinzu und ließ 1 Stunde bei 90 ° C rühren. Die Reaktionsmischung wurde auf 70 ° C abgekühlt, mit ca. 40 g 75 gew.-%iger Schwefelsäure auf einen pH-Wert von 4,5 bis 5 eingestellt und 2 mal mit je 750 g Wasser bei 70 bis 80 ° C gewaschen. Das Lösungsmittel wurde bei 180 bis 185 ° C und 5 mbar in einem Dünnschichtverdampfer abdestilliert.

Man erhielt 1 194 g eines hellen Kondensationsproduktes mit einem Erweichungspunkt nach DIN 53180 von 83 ° C.
Säurezahl (DIN 53401)<5
Farbzahl (DIN 6162)<2
Nichtflüchtige Bestandteile (2 Stunden 125 ° C)>98 %

Beispiel 3

Vergilbungsbeständiger Malerlack auf Basis eines langöligen, fettsäuremodifizierten Alkydharzes

44 g Alkydharz auf Basis harzsäurearmer Tallölfettsäure, 60 %ig in Testbenzin (Öllänge 66 %),
6,6 g Harz nach Beispiel 1 bzw. 2,
3,0 g Dimethyldioctadecyl-ammonium-bentonite (Antiabsetzmittel) 10 %ig in Xylol,
0,5 g Siliconöl 10 %ig in Toluol (Verlaufsmittel),
0,4 g Methylethylketoxim (Hautverhütungsmittel),
1,0 g Trockenstoff (11,5 % Co, 1,5 % Mn, 22 % Pb) 50 %ig in Testbenzin,
30,0 g Titandioxid RN 56 und
14,5 g Testbenzin

werden bei Raumtemperatur in einem Rührgefäß gemischt. Der Lack mit einem Festgehalt von 64 Gew.% wurde mittels Pinsel auf Holz oder Metall aufgetragen.

Man erhielt einen Lackfilm mit hohem Glanz und ausgezeichneter Lichtbeständigkeit.

Beispiel 4

Vergilbungsbeständiger Überzugslack auf Basis eines langöligen Sojaalkydharzes

46 g Sojaölalkydharz, 75 %ig in Testbenzin (Öllänge 63 %),
10 g Harz nach Beispiel 1 bzw. 2,
0,4 g Cobaltnaphthenat mit 6 % Cobalt,
0,6 g Bleinaphthenat mit 24 % Blei,
2,0 g Calciumoctoat mit 4 % Calcium und
41 g Testbenzin

wurden bei Raumtemperatur in einem Rührgefäß gemischt. Man erhielt 100 g eines Lackes mit einem Festgehalt von 44,5 Gew.%.

Der mittels Spritzpistole auf Holz oder Metall applizierte Lack zeichnete sich durch eine sehr gute Lichtbeständigkeit und hohen Glanz aus.

**Patentansprüche**

**1.** Harnstoff-Aldehyd-Polykondensate, erhältlich durch Umsetzung von

a) 1 mol eines Harnstoffes der allgemeinen Formel (I)

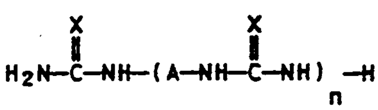

(I),

in der X Sauerstoff oder Schwefel und A einen $C_1$-$C_6$-Alkylenrest bedeuten und n für O bis 3 steht, mit 1,9 (n + 1) bis 2,2 (n + 1) mol eines Aldehyds der allgemeinen Formel (II)

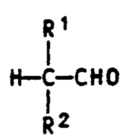

(II),

in der $R^1$ und $R^2$ für Kohlenwasserstoffreste mit bis zu 20 C-Atomen stehen, bei Temperaturen von 60 bis 120 °C in Gegenwart einer Säure zu einem 2-Oxohexahydropyrimidinderivat und

b) anschließende Umsetzung des so hergestellten 2-Oxohexahydropyrimidinderivats mit einem Gemisch aus 2,8 bis 3,2 mol Formaldehyd und 2,8 bis 3,2 mol Aldehyd (II), jeweils pro mol Harnstoff (I), bei Temperaturen von 60 bis 120 °C,

c) Entfernung des Wassers, sowie

d) weiterer Umsetzung des so erhaltenen Harzes mit einem Alkalimetallalkoholat bei 80 bis 100 °C.

**2.** Harnstoff-Aldehyd-Polykondensate nach Anspruch 1, erhältlich unter Verwendung von Harnstoff, Thioharnstoff, Methylendiharnstoff und Hexamethylendiharnstoff als Harnstoffe der allgemeinen Formel (I).

**3.** Harnstoff-Aldehyd-Polykondensate nach Anspruch 1 und 2, erhältlich unter Verwendung von Isobutyraldehyd, 2-Methylpentanal, 2-Ethylhexanal und 2-Phenylpropanal als Aldehyde (II).

**4.** Verfahren zur Herstellung von Harnstoff-Aldehyd-Polykondensaten gemäß den Ansprüchen 1 bis 3, dadurch gekennzeichnet, daß man

a) 1 mol eines Harnstoffes der allgemeinen Formel (I)

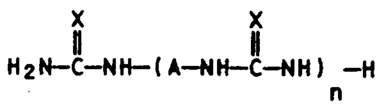

(I),

in der X Sauerstoff oder Schwefel und A einen $C_1$-$C_6$-Alkylenrest bedeuten und n für O bis 3 steht, mit 1,9 (n + 1) bis 2,2 (n + 1) mol eines Aldehyds der allgemeinen Formel (II)

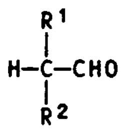

(II),

in der $R^1$ und $R^2$ für Kohlenwasserstoffreste mit bis zu 20 C-Atomen stehen, bei Temperaturen von 60 bis 120 °C in Gegenwart einer Säure zu einem 2-Oxohexahydropyrimidinderivat umsetzt und das so hergestellte 2-Oxohexahydropyrimidinderivats

b) anschließend mit einem Gemisch aus 2,8 bis 3,2 mol Formaldehyd und 2,8 bis 3,2 mol Aldehyd (II), jeweils pro mol Harnstoff (I), bei Temperaturen von 60 bis 120 °C, reagieren läßt,

c) das Wasser entfernt und

d) das so erhaltene Harz mit einem Alkalimetallalkoholat bei 80 bis 100 °C weiter umsetzt.

**5.** Verwendung der Harnstoff-Aldehyd-Polykondensate gemäß den Ansprüchen 1 bis 4 als Bindemittel für Lacke und Anstrichstoffe sowie als Basisharze für Pigment- und Füllstoffzubereitungen.

**6.** Verwendung der Harnstoff-Aldehyd-Polykondensate gemäß den Ansprüchen 1 bis 4 als Bindemittel in Straßenmarkierungsbeschichtungsmitteln.

**7.** Lacke und Bindemittel, enthaltend Harnstoff-Aldehyd-Polykondensate gemäß den Ansprüchen 1 bis 4.

## Claims

**1.** A urea-aldehyde polycondensate obtainable by reaction of

a) 1 mole of a urea of the general formula (I)

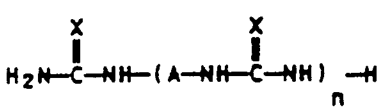

(I)

where X is oxygen or sulfur, A is $C_1$-$C_6$-alkylene, and n is from 0 to 3, with 1.9 (n + 1) to 2.2 (n + 1) moles of an aldehyde of the general formula (II)

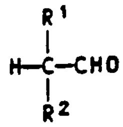

(II)

where $R^1$ and $R^2$ are each hydrocarbyl of up to 20 carbon atoms, at from 60 to 120° in the presence of an acid to give a 2-oxohexahydropyrimidine derivative and
b) subsequent reaction of the 2-oxohexahydropyrimidine derivative thus prepared with a mixture of from 2.8 to 3.2 moles of formaldehyde and from 2.8 to 3.2 moles of aldehyde (II), each per mole of urea (I), at from 60 to 120°C,
c) removal of water, and
d) further reaction of the resin thus obtained with an alkali metal alcoholate at from 80 to 100°C.

**2.** A urea-aldehyde polycondensate as claimed in claim 1, obtainable by using urea, thiourea, methylenediurea and hexamethylenediurea as ureas of the general formula (I).

**3.** A urea-aldehyde polycondensate as claimed in claim 1 or 2, obtainable by using isobutyraldehyde, 2-methylpentanal, 2-ethylhexanal and 2-phenylpropanal as aldehydes (II).

**4.** A process for preparing a urea-aldehyde polycondensate as claimed in claim 1 or 2 or 3, which comprises reacting
a) 1 mole of a urea of the general formula (I)

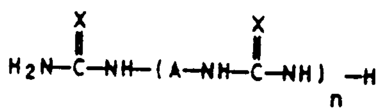

(I)

where X is oxygen or sulfur, A is $C_1$-$C_6$-alkylene, and n is from 0 to 3, with 1.9 (n + 1) to 2.2 (n + 1) moles of an aldehyde of the general formula (II)

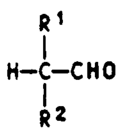

(II)

where $R^1$ and $R^2$ are each hydrocarbyl of up to 20 carbon atoms, at from 60 to 120°C in the presence of an acid to give a 2-oxohexahydropyrimidine derivative and reacting the 2-oxohexahydropyrimidine thus prepared
b) with a mixture of from 2.8 to 3.2 moles of formaldehyde and 2.8 to 3.2 moles of aldehyde (II), each per mole of urea (I), at from 60 to 120°C,
c) removing the water and
d) further reacting the resin thus obtained with an alkali metal alcoholate at from 80 to 100°C.

**5.** Use of a urea-aldehyde polycondensate as claimed in claim 1 or 2 or 3 or 4 as a binder for surface coatings and paints and as a base resin for pigment and filler formulations.

**6.** Use of a urea-aldehyde polycondensate as claimed in claim 1 or 2 or 3 or 4 as a binder in road marking coatings.

**7.** A surface coating or binder containing a ureaaldehyde polycondensate as claimed in claim 1 or 2 or 3 or 4.

**Revendications**

**1.** Produits de polycondensation d'urée et d'aldéhyde, que l'on peut obtenir par la réaction de
a) 1 mole d'une urée de la formule générale (I)

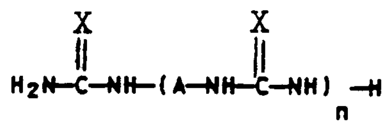

(I),

dans laquelle X représente un atome d'oxygène ou un atome de soufre et A représente un radical alkylène en $C_1$ à $C_6$ et n est égal à 0, 1, 2 ou 3, avec 1,9 (n + 1) à 2,2 (n + 1) moles d'un aldéhyde de la formule générale (II)

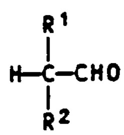

(II),

dans laquelle $R^1$ et $R^2$ représentent des radicaux hydrocarbonés comportant jusqu'à 20 atomes de carbone, à des températures de 60 à 120 ° C, en présence d'un acide, de manière à obtenir un dérivé de 2-oxohexahydropyrimidine et
b) réaction subséquente du dérivé de 2-oxohexahydropyrimidine ainsi obtenu avec un mélange de 2,8 à 3,2 moles de formaldéhyde et de 2,8 à 3,2 moles d'aldéhyde (II), à chaque fois par mole d'urée (I), à des températures de 60 à 120 ° C,
c) élimination de l'eau, comme aussi
d) poursuite de la réaction de la résine ainsi obtenue avec un alcoolate de métal alcalin à 80-100 ° C.

**2.** Produit de polycondensation d'urée et d'aldéhyde selon la revendication 1, que l'on peut obtenir par l'utilisation d'urée, de thiourée, de méthylènediurée et d'hexaméthylènediurée, à titre d'urée de la formule générale (I).

**3.** Produit de polycondensation d'urée et d'aldéhyde suivant les revendications 1 et 2, que l'on peut obtenir par l'utilisation d'isobutyraldéhyde, de 2-méthylpentanal, de 2-éthylhexanal et de 2-phénylpropanal à titre d'aldéhyde (II).

**4.** Procédé de fabrication de produits de polycondensation d'urée et d'aldéhyde selon les revendications 1 à 3, caractérisé en ce que l'on fait réagir
a) 1 mole d'une urée de la formule générale (I)

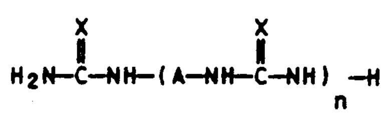

(I),

dans laquelle X représente un atome d'oxygène ou un atome de soufre et A représente un radical alkylène en $C_1$ à $C_6$ et n est égal à 0, 1, 2 ou 3, avec 1,9 (n + 1) à 2,2 (n + 1) moles d'un aldéhyde de la formule générale (II)

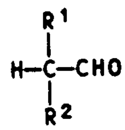 (II),

dans laquelle $R^1$ et $R^2$ représentent des radicaux hydrocarbonés comportant jusqu'à 20 atomes de carbone, à des températures de 60 à 120 °C, en présence d'un acide, de manière à obtenir un dérivé de 2-oxohexahydropyrimidine et

b) on fait ensuite réagir le dérivé de 2-oxohexahydropyrimidine ainsi obtenu avec un mélange de 2,8 à 3,2 moles de formaldéhyde et de 2,8 à 3,2 moles d'aldéhyde (II), à chaque fois par mole d'urée (I), à des températures de 60 à 120 °C,

c) on élimine l'eau et

d) on fait réagir la résine ainsi formée avec un alcoolate de métal alcalin à des températures de 80 à 100 °C.

**5.** Utilisation des produits de polycondensation d'urée et d'aldéhyde selon Des revendications 1 à 4, à titre de liants pour des peintures et des laques ou vernis, comme aussi à titre de résines de base pour des préparations de pigments et de charges.

**6.** Utilisation des produits de polycondensation d'urée et d'aldéhyde selon les revendications 1 à 4, à titre de liants dans des compositions de revêtement destinées au marquage des chaussées ou rues.

**7.** Laques ou vernis et liants, qui contiennent des produits de polycondensation d'urée et d'aldéhyde selon les revendications 1 à 4.